# EUROPEAN PATENT APPLICATION

(11) **EP 4 386 884 A1**
(43) Date of publication of application: **19.06.2024**
(21) Application number: 23802548.0
(22) Date of filing: 04.04.2023
(51) Int. Cl.: H01M 4/13, H01M 4/139, H01M 10/0587

(54) **ELECTRODE SHEET AND MANUFACTURING METHOD, ELECTRODE ASSEMBLY AND MANUFACTURING METHOD, BATTERY CELL, AND BATTERY**

(30) Priority: 07.05.2022 CN 202210490400
(71) Applicant: Contemporary Amperex Technology Co., Limited, Ningde, Fujian 352100 (CN)
(72) Inventor: XUE, Qingrui, Ningde, Fujian 352100 (CN); LI, Wei, Ningde, Fujian 352100 (CN); ZHANG, Zige, Ningde, Fujian 352100 (CN); ZHANG, Yu, Ningde, Fujian 352100 (CN); ZHAO, Zhengyuan, Ningde, Fujian 352100 (CN)
(74) Representative: Rowlands, Stuart Michael
(86) International application number: PCT/CN2023/086175
(87) International publication number: WO 2023/216772

(57) **Abstract**

The present application relates to an electrode sheet (10) and a manufacturing method, an electrode assembly (100) and a manufacturing method, a battery cell (1000), and a battery (10000). In the design of the electrode sheet (10), the thickness h1 of a tab (12) is designed to be greater than the thickness h2 of a main body portion (1 1a), so that a thickness difference exists between the tab (12) and the main body portion (11a). In this way, in the manufacture of the battery, elimination of a gap between tabs (12) of wound electrode sheets (10) is facilitated, so that the tabs (12) are closely connected to each other. At this time, in the manufacture of the battery (10000) of the present application, there is no need to perform a flattening process on the tabs (12), so that particles generated by flattening are effectively prevented from falling into the battery (10000), thus greatly improving the safety performance of the battery (10000). Because there is no need to flatten the tabs (12), current flow capacity between the tabs (12) can be guaranteed without the need for reserving a space required for flattening on the electrode sheets (10), and a space for bending the tabs (12) can also be sufficiently and efficiently used so that the electrode sheets (10) fully use the space to improve the energy density of the battery (10000); meanwhile, the risks of inward insertion of the tabs (12) and short circuits that may be caused by the flattening process can also be effectively avoided, thereby further improving the safety performance of the battery (10000).

## Description

### CROSS-REFERENCE TO RELATED APPLICATIONS

This application refers to Chinese Patent Application No. 202210490400X, filed on May 07, 2022 and entitled "ELECTRODE PLATE AND MANUFACTURING METHOD THEREOF, ELECTRODE ASSEMBLY AND MANUFACTURING METHOD THEREOF, BATTERY CELL, AND BATTERY", the entire contents of which are incorporated herein by reference.

### TECHNICAL FIELD

This application relates to the field of battery technologies, and in particular, to an electrode plate and a manufacturing method thereof, an electrode assembly and a manufacturing method thereof, a battery cell, and a battery.

### BACKGROUND

With the widespread use of batteries, increasingly high requirements are imposed on the safety performance of batteries. For example, during battery manufacturing, to ensure that no gap is present between tabs, it is common to apply a flattening process to a wound full-tab to eliminate the gap between two adjacent tabs. However, during flattening, substances such as metal particles are produced and are likely to fall into a bare battery, resulting in the risk of short circuit in the battery and increasing the risk of safety hazards.

### SUMMARY

In view of this, it is necessary to provide an electrode plate and a manufacturing method thereof, an electrode assembly and a manufacturing method thereof, a battery cell, and a battery, so as to prevent particles produced during flattening from falling into the battery, thereby improving the safety performance of the battery.

According to a first aspect, this application proposes an electrode plate. The electrode plate includes an electrode plate current collector including a main body portion and a tab protruding from the main body portion, and an active layer applied onto at least one side of the main body portion, where the thickness h1 of the tab is greater than the thickness h2 of the main body portion.

In the electrode plate, the thickness h1 of the tab is designed to be greater than the thickness h2 of the main body portion, such that a thickness difference is present between the tab and the main body portion. This helps to eliminate the gap between tabs of wound electrode plates during battery manufacturing, such that the tabs are tightly connected to each other. In this case, during the battery manufacturing in this application, there is no need to flatten the tabs, effectively preventing particles produced during flattening from falling into the battery, thereby greatly improving the safety performance of the battery. Since the tabs do not need to be flattened, it is unnecessary to reserve space for flattening on the electrode plates. This not only ensures current flowing capability between the tabs, but also allows for full and efficient use of a space for foldable tabs, so that the space is effectively utilized by the electrode plate, increasing the energy density of the battery. Moreover, the risk of short circuit caused by interpolation of a tab in the flattening process can be effectively avoided, further improving the safety performance of the battery. In addition, in this application, the thickness of the tab is properly controlled, and the use of conventional flattening processes is not needed, effectively compensating for the application of a composite substrate to which a flattening process cannot be applied in a large cylindrical cell.

In some embodiments, the tab includes a body and a filling layer disposed on at least one side of the body in a thickness direction.

In this way, the filling layer disposed on the at least one side of the body actively increases the thickness of the body, so that the tab has a greater thickness than the main body portion of the current collector, ensuring that the gap between the wound tabs is filled during battery manufacturing. This replaces conventional flattening processes and improves the safety performance of the battery.

In some embodiments, two opposite sides of the body in the thickness direction each are provided with the filling layer. In such a design, the filling layers disposed on the two sides of the body can further increase the thickness of the tabs, thereby effectively eliminating the gap between the wound tabs.

In some embodiments, the filling layer is a welded piece. Designing the filling layer as a welded piece not only ensures effective thickness of the tabs but also enhances the bonding strength between the filling layer and the body, thereby improving structural stability of the electrode plate.

In some embodiments, the tab further includes a curing layer. The curing layer is disposed on at least one side surface of the welded piece facing away from the body so as to cure a surface of the welded piece, preventing spall particles produced during welding from falling into the battery which can cause an electrical accident of the battery, thereby further improving the safety performance of the battery.

In some embodiments, the thickness h1 of the tab is greater than a thickness sum h3 of the main body portion and the active layer. In this way, with the thickness of the tab further designed to be greater than a thickness sum of the main body portion and the active layer, elimination of the gap between the tabs can be further ensured during winding, thereby improving the safety performance of the battery.

According to a second aspect, this application provides an electrode assembly. The electrode assembly includes a first electrode plate and a second electrode plate having opposite polarities, and a separator disposed between the first electrode plate and the second electrode plate. The first electrode plate, the second electrode plate, and the separator are wound to form a wound structure, where the first electrode plate and/or the second electrode plate is the electrode plate according to any one of the foregoing embodiments.

The electrode assembly employs the foregoing electrode plates in which tabs do not need to be flattened. Therefore, it is unnecessary to reserve space for flattening on the electrode plates, such that this space can be effectively utilized by the electrode plates, increasing the energy density of the battery. Moreover, the risk of short circuit caused by interpolation of a tab in the flattening process can be effectively avoided, further improving the safety performance of the battery.

In some embodiments, a tab of the first electrode plate and a tab of the second electrode plate are separately located on two opposite sides of the electrode assembly; either of the tabs is wound to form at least two consecutive ring layers; and two of the adjacent ring layers at a same side are attached to each other. In this way, the tabs each are wound to form at least two consecutive ring layers and the two adjacent ring layers are controlled to be attached to each other, so that no gap is present between the tabs obtained in such a manner. Not using a flattening process facilitates improvement of the safety performance and energy density of the battery.

In some embodiments, the tabs of the first electrode plate and second electrode plate each include a body and a filling layer. Between the two adjacent ring layers at the same side, two surfaces of the filling layer separately lean against two wound bodies. In this way, by virtue of the filling layer at one side, the gap between the wound tabs is eliminated, thereby improving the safety performance of the battery.

In some embodiments, the tabs of the first electrode plate and second electrode plate each include a body and filling layers separately disposed at two opposite sides of the body in a thickness direction, where the two filling layers lean against each other. In this way, by virtue of the filling layers at the two sides of the body, the gap between the wound tabs is further eliminated, thereby further improving the safety performance of the battery.

In some embodiments, the electrode assembly further includes a current collection component. The current collection component is electrically connected to the wound tab. In such a design, the current collection component is electrically connected to the tab, allowing for convenient electrical connection between the electrode assembly and an end cover, thereby facilitating the assembly of battery cell.

According to a third aspect, this application provides an electrode plate manufacturing method including the following steps: providing a current collector, where the current collector includes a main body portion and a tab protruding from the main body portion; applying an active layer onto at least one side of the main body portion; and controlling the thickness h1 of the tab to be greater than the thickness h2 of the main body portion.

According to the electrode plate manufacturing method, the thickness h1 of the tab is designed to be greater than the thickness h2 of the main body portion, such that a thickness difference is present between the tab and the main body portion. This helps to eliminate the gap between tabs of wound electrode plates during battery manufacturing, such that the tabs are tightly connected to each other.

In some embodiments, the step of controlling the thickness h1 of the tab of an electrode plate to be greater than the thickness h2 of the main body portion includes: welding a filling layer to at least one side of the body of the tab in a thickness direction, such that a thickness sum of all the filling layer(s) and the body is greater than the thickness h2 of the main body portion. In this way, with the filling layer welded to at least one side of the body, the gap between the wound tabs is effectively eliminated, improving the safety performance of the battery.

In some embodiments, after the step of welding a filling layer to at least one side of the body of the tab in a thickness direction, the electrode plate manufacturing method further includes: providing a curing layer on a surface of the filling layer, except for a side surface attached to the body. The surface of the filling layer being cured in such a way prevents spall particles produced during welding from falling into the battery which can cause an electrical accident of the battery, thereby further improving the safety performance of the battery.

In some embodiments, after the step of welding a filling layer to at least one side of the body of the tab in a thickness direction, the electrode plate manufacturing method further includes: performing die cutting on an end of the filling layer and/or the body far away from the current collector. With such a design, the end of the filling layer and/or the body far away from the electrode plate is cut away through die cutting to expose a welded piece, facilitating electrical connection between the current collection component and the wound tab.

In some embodiments, after the method, the following step is further performed: rolling the active layer and the main body portion. In this way, structurally stable electrode plates are obtained separately through the rolling process.

According to a fourth aspect, this application provides an electrode assembly manufacturing method including the following steps: manufacturing two electrode plates having opposite polarities using the electrode plate manufacturing method according to any one of the foregoing embodiments; stacking the two electrode plates and a separator, such that tabs of the two electrode plates separately protrude from two opposite sides of the separator; and winding the two electrode plates and the separator together, such that the tab at either side is wound to form at least two consecutive ring layers attached to each other.

According to the foregoing electrode assembly manufacturing method, firstly two electrode plates having opposite polarities are manufactured using the foregoing electrode plate manufacturing method; and then the two electrode plates and a separator are stacked and wound together, such that two adjacent ring layers are attached to each other. This helps to eliminate the gap between tabs of the wound electrode plates, so that the tabs are tightly connected to each other.

In some embodiments, before the step of stacking the two electrodes and a separator, the electrode assembly manufacturing method further includes: respectively slitting the two electrode plates according to preset dimensions. In this way, the electrode plates are slit using a slitting process to meet requirements for manufacturing batteries of different specifications.

In some embodiments, after the method, the following step is further performed: electrically connecting a current collection component to the tab wound at one side. This allows for convenient electrical connection between an electrode assembly and an end cover, thereby facilitating assembly of a battery cell.

According to a fifth aspect, this application provides a battery cell including the electrode assembly according to any one of the foregoing embodiments.

According to a sixth aspect, this application provides a battery including the foregoing battery cell.

The foregoing descriptions are merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. It will be apparent that the accompanying drawings in the following descriptions show merely some embodiments of this application, and persons of ordinary skill in the art may still derive other drawings from the accompanying drawings without creative efforts. In the accompanying drawings:
FIG. 1 is a structural schematic diagram of a battery according to some embodiments of this application;
FIG. 2 is a structural schematic diagram of a battery cell according to some embodiments of this application;
FIG. 3 is a structural schematic diagram of an electrode plate before welding according to some embodiments of this application;
FIG. 4 is a structural schematic diagram of an electrode plate during welding according to some embodiments of this application;
FIG. 5 is a structural schematic diagram of an electrode plate after die cutting according to some embodiments of this application;
FIG. 6 is a schematic cross-sectional view of a wound electrode assembly according to some embodiments of this application;
FIG. 7 is a structural schematic diagram a wound electrode assembly according to some embodiments of this application;
FIG. 8 is a first schematic flowchart of manufacturing an electrode plate according to some embodiments of this application;
FIG. 9 is a second schematic flowchart of manufacturing an electrode plate according to some embodiments of this application;
FIG. 10 is a third schematic flowchart of manufacturing an electrode plate according to some embodiments of this application;
FIG. 11 is a first schematic flowchart of manufacturing an electrode assembly according to some embodiments of this application; and
FIG. 12 is a second schematic flowchart of manufacturing an electrode assembly according to some embodiments of this application.

Reference signs:
10000. battery; 1000. battery cell; 2000. box; 2100. first portion; 2200. second portion; 100. electrode assembly; 10. electrode plate; 11. current collector; 11a. main body portion; 112. active layer; 12. tab; 121. body; 122. filling layer; 12a. welded piece; 123. ring layer; 20. first electrode plate; 30. second electrode plate; and 40. separator.

### DESCRIPTION OF EMBODIMENTS

To make the foregoing purposes, features, and advantages of this application more obvious and easier to understand, the following describes specific embodiments of this application in detail. Various specific details are elaborated in the following descriptions for fully understanding this application. However, this application can be implemented in various other manners differing from those described herein. Persons skilled in the art can make similar improvements without departing from the essence of this application. Therefore, this application is not limited by the following specific embodiments disclosed.

In the description of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for the ease and brevity of description of the embodiments of this application rather than indicating or implying that the means or components mentioned must have specific orientations or must be constructed or manipulated according to specific orientations, and therefore shall not be construed as any limitations on embodiments of this application.

In addition, the terms "first" and "second" are merely for the purpose of description, and shall not be understood as any indication or implication of relative importance or any implicit indication of the number of technical features indicated. Therefore, a feature limited by "first" or "second" can explicitly or implicitly include at least one of such features. In the description of this application, "a plurality of" means at least two, for example, two or three, unless otherwise specifically stated.

In the description of this application, unless otherwise clearly specified and defined, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements, unless otherwise specifically stated. Persons of ordinary skill in the art can understand specific meanings of these terms in this application as appropriate to specific situations.

In this application, unless otherwise clearly specified and defined, a first feature being "above" or "below" a second feature may mean that the first feature is in direct contact with the second feature, or the first feature and the second feature are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

It should be noted that when a component is referred to as being "fastened to" or "disposed at" another component, it may be directly on the another component, or there may be a component therebetween. When a component is deemed as being "connected to" another component, it may be directly connected to the another component, or there may be a component in between. The terms "vertical", "horizontal", "top", "bottom", "left", "right", and other similar expressions as used herein are for illustration only and do not represent a unique implementation.

Currently, from the perspective of market development, application of traction batteries is becoming more and more extensive. Traction batteries have not only been used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, increasingly high requirements are imposed on the safety performance of batteries.

During battery manufacturing, a positive electrode plate, a separator, and a negative electrode plate are stacked and then wound. After winding, a certain gap is typically present between two adjacent tabs. During laser welding of a top cover, laser leaks from the gap, burning the separator easily, and accordingly damaging an internal structure of the battery. In addition, during welding, particles produced enter the battery through the gap, resulting in the risk of short circuit in the battery, thus increasing potential safety hazards.

To resolve the problem of generation of the gap between the tabs, it has been found through research that wound tabs can be flattened using a flattening process so as to eliminate the gap between the tabs. However, during flattening, metal particles are produced probably, and these particles enter or fall into the gap between the tabs during flattening, easily resulting in the risk of short circuit in the battery. In addition, during the use of the flattening process, space for flattening needs to be reserved at the electrode plate, making the electrode plate occupy less space in a battery cell, thereby reducing the energy density of the battery. Besides, during flattening, the risk of interpolation of the tab is likely to occur, which further increases the risk of short circuit of the battery.

Based on the foregoing consideration, an electrode plate is designed to address the issue of reduced battery energy density and safety resulting from the use of a flattening process in consideration of the gap between tabs during the battery manufacturing, where the thickness h1 of a tab is designed to be greater than the thickness h2 of a main body portion.

In such an electrode plate, the thickness h1 of the tab is designed to be greater than the thickness h2 of the main body portion, such that a thickness difference is present between the tab and the main body portion. This helps to eliminate the gap between tabs of wound electrode plates during battery manufacturing, such that the tabs are tightly connected to each other. In this case, during the battery manufacturing in this application, the tabs do not need a flattening process, effectively preventing particles produced during flattening from falling into the battery, thereby greatly improving the safety performance of the battery.

Since the tabs do not need to be flattened, it is unnecessary to reserve space for flattening on the electrode plates, such that this space can be effectively utilized by the electrode plates, increasing the energy density of the battery. Moreover, the risk of short circuit caused by interpolation of a tab in the flattening process can be effectively avoided, further improving the safety performance of the battery. In addition, in this application, the thickness of the tab is properly controlled, and the use of conventional flattening processes is not needed, effectively compensating for the application of a composite substrate to which a flattening process cannot be applied in a large cylindrical cell.

The battery cell disclosed in the embodiments of this application may be used without limitation in an electric apparatus such as a vehicle, a ship, or an aircraft. The battery cell, the battery, and the like disclosed in this application may be used to constitute a power supply system of the electric apparatus. This helps to alleviate and automatically adjust deterioration of swelling resistance of the cell, supplement the electrolyte consumed, and improve performance stability and service life of the battery. The electric apparatus may be but is not limited to a mobile phone, a tablet, a laptop computer, an electric toy, an electric tool, an electric bicycle, an electric car, a ship, and a spacecraft. The electric toy may include a fixed or mobile electric toy, for example, a game console, an electric toy car, an electric toy ship, and an electric toy aircraft. The spacecraft may include an aircraft, a rocket, a space shuttle, and a spaceship.

In some embodiments of this application, the battery can be used as not only the operational power source for the vehicle but also a driving power source for the vehicle, replacing all or part of the fossil fuel or the natural gas to provide driving traction for the vehicle.

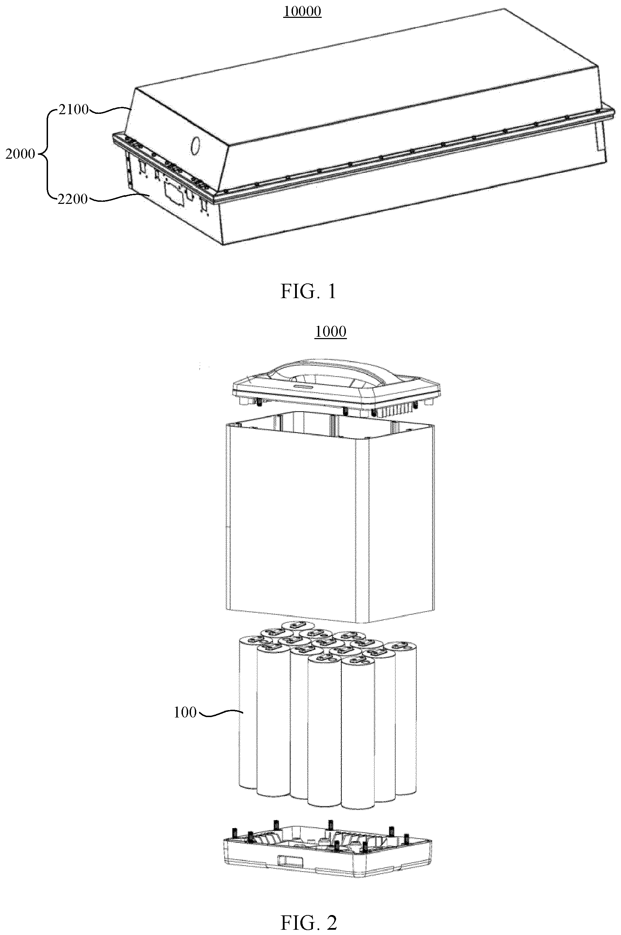

Referring to FIG. 1 and FIG. 2, FIG. 1 is a structural diagram of a battery 10000 according to some embodiments of this application, and FIG. 2 is a structural diagram of a battery cell 1000 according to some embodiments of this application. The battery 10000 includes a box 2000 and a battery cell 1000, where the battery cell 1000 is accommodated in the box 2000. The box 2000 is configured to provide an accommodating space for the battery cell 1000. The box 2000 may be a variety of structures. In some embodiments, the box 2000 may include a first portion 2100 and a second portion 2200. The first portion 2100 and the second portion 2200 fit together so that the first portion 2100 and the second portion 2200 jointly define an accommodating space for accommodating the battery cell 1000. The second portion 2200 may be a hollow structure with one end open, and the first portion 2100 may be a plate structure. The first portion 2100 covers an open side of the second portion 2200, so that the first portion 2100 and the second portion 2200 jointly define an accommodating space. Alternatively, both the first portion 2100 and the second portion 2200 may be a hollow structure with one side open, and the open side of the first portion 2100 covers the open side of the second portion 2200. It will be apparent that the box 2000 formed by the first portion 2100 and the second portion 2200 may be in various shapes, such as a cylinder or a cuboid.

In the battery 10000, a plurality of battery cells 1000 may be provided, and the plurality of battery cells 1000 may be connected in series, parallel, or series-parallel, where being connected in series-parallel means a combination of series and parallel connections of the plurality of battery cells 1000. The plurality of battery cells 1000 may be directly connected in series, parallel, or series-parallel, and then an entirety of the plurality of battery cells 1000 is accommodated in the box 2000. It will be apparent that the battery 10000 may alternatively be formed in a manner that a plurality of battery cells 1000 are connected in series, parallel, or series-parallel first to form a battery 10000 module and then a plurality of battery 10000 modules are connected in series, parallel, or series-parallel to form an entirety which is accommodated in the box 2000. The battery 10000 may further include other structures. For example, the battery 10000 may further include a busbar configured to implement electrical connection between the plurality of battery cells 1000.

Each battery cell 1000 may be a secondary battery or a primary battery, or may be a lithium-sulfur battery 10000, a sodium-ion battery 10000, or a magnesium-ion battery 10000, without being limited thereto. The battery cell 1000 may be cylindrical, flat, cuboid, or of other shapes.

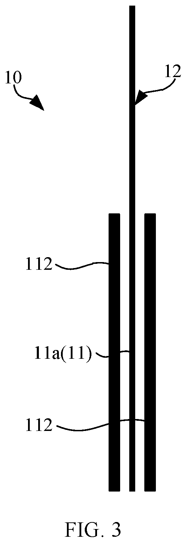

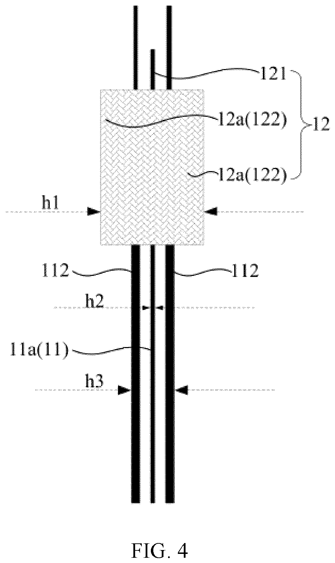

According to some embodiments of this application, referring to FIG. 3 and FIG. 4, this application provides an electrode plate 10 including a current collector 11 and an active layer 112. The current collector 11 includes a main body portion 11a and a tab 12 protruding from the main body portion 11a. The active layer 112 is applied onto at least one side of the main body portion 11a, where the thickness h1 of the tab 12 is greater than the thickness h2 of the main body portion 11a.

The current collector 11 refers to a component or part capable of not only carrying an active substance but also collecting and outputting current generated by the active substance of an electrode. The material of the current collector may be but is not limited to metal materials such as copper, aluminum, nickel, and stainless steel, and it will be apparent that it may be a semiconductor material such as carbon, or a composite material such as conductive resin, titanium-nickel shape memory alloy, or carbon-coated aluminum foil. The current collector 11 typically includes two portions: a main body portion 11a needing to be coated with an active substance, and a portion uncoated with an active substance, where the portion uncoated with an active substance generally serves as a tab 12.

The active layer 112 refers to an active substance applied on the current collector 11, and a specific composition of the active substance varies depending on the polarity of the electrode plate 10. For example, the active substance on a positive electrode plate 10 may be but is not limited to lithium cobaltate, lithium manganate, lithium nickelate, lithium iron phosphate, and a ternary material. The active substance on a negative electrode plate 10 may be but is not limited to graphite, lithium titanate, and silicon oxide.

The tab 12 is formed by protrusion of the main body portion 11a of the current collector 11, that is, a portion of the current collector 11 uncoated with an active substance. Depending on the polarities of the electrode plates 10, the tabs 12 are classified into a positive tab 12 and a negative tab 12. The positive tab 12 is typically made of an aluminum material, and the negative tab 12 is typically made of nickel or a copper-plated nickel material. On the electrode plate 10, the tab 12 can extend along the entire width of the electrode plate 10, that is, a full-tab 12 structure. Alternatively, the tab 12 may be a segment of structure extending along the width direction of the electrode plate 10, to be specific, an extension length of the tab 12 is less than the width of the electrode plate 10.

The thickness h1 of the tab 12 being greater than the thickness h2 of the main body portion 11a is implemented in various manners, as long as a thickness relationship of the tab 12 and the main body portion 11a is satisfied. For example, at the upstream side of materials or in a production process of the electrode plate 10, a same current collector 11 is controlled to have two different thicknesses, where a thicker portion serves as the tab 12, and a thinner portion serves as the main body portion 11a of the current collector 11, that is, a coated region. Alternatively, during manufacturing of a battery 10000, the portion, uncoated with an active substance, of the current collector 11 is thickened, for example, the portion, uncoated with an active substance, of the current collector 11 is thickened through welding, adhesion by a conductive adhesive, and the like, so as to obtain a tab 12.

During the manufacturing of the battery 10000 of this application, the tabs 12 do not need a flattening process, effectively preventing particles produced during flattening from falling into the battery 10000, thereby greatly improving the safety performance of the battery 10000. Since the tabs 12 do not need to be flattened, it is unnecessary to reserve space for flattening on the electrode plates 10, such that this space can be effectively utilized by the electrode plates 10, increasing the energy density of the battery 10000. Moreover, the risk of short circuit caused by interpolation of the tab 12 in the flattening process can be effectively avoided, further improving the safety performance of the battery 10000. In addition, in this application, the thickness of the tab 12 is properly controlled, and the use of conventional flattening processes is not needed, effectively compensating for the application of a composite substrate to which a flattening process cannot be applied in a large cylindrical cell.

According to some embodiments of this application, referring to FIG. 4, the tab 12 includes a body 121 and a filling layer 122 disposed on at least one side of the body 121 in a thickness direction.

The body 121 should be understood as a portion, protruding outwards, of the main body portion 11a of the current collector 11, or understood as a portion, uncoated with an active substance, of the current collector 11. The thickness of the body 121 is generally equal to or approximately equal to the thickness of the main body portion 11a. It will be apparent that in other embodiments, the thickness of the body 121 may alternatively be set to be less than the thickness of the main body portion 11a, and in this case, the filling layer 122 should be designed to be thicker so as to compensate for the thickness difference between the body 121 and the main body portion 11a.

The filling layer 122 refers to a component capable of filling the gap between the wound tabs 12. In addition, to ensure good conductivity of the tab 12, the filling layer 122 should also be conductive, and for example, may be but is not limited to an aluminum foil, a copper foil, or a silver foil. The filling layer 122 may be disposed on only one side of the body 121 or on both two sides of the body 121. When the filling layer 122 is disposed on only one side of the body 121, after the electrode plate 10 is wound, two surfaces of the filling layer 122 respectively lean against two wound bodies 121. A specific structure may refer to the following embodiment and is not specifically described herein.

Besides, the filling layer 122 is connected to the body 121 in various manners, as long as the filling layer 122 is fixed to the body 121, for example, through welding, or adhesion by a conductive adhesive.

The filling layer 122 disposed on the at least one side of the body 121 actively increases the thickness of the body 121, so that the tab 12 has a greater thickness than the main body portion 11a of the current collector 11, ensuring that the gap between the wound tabs 12 is filled during the manufacturing of the battery 10000. This replaces conventional flattening processes and improves the safety performance of the battery 10000.

According to some embodiments of this application, referring to FIG. 4, two opposite sides of the body 121 in a thickness direction each are provided with the filling layer 122.

The two sides of the body 121 each are provided with the filling layer 122. Therefore, after the electrode plate 10 is wound, two filling layers 122 are present between two adjacent wound bodies 121. In this case, one surface of one filling layer 122 leans against the body 121 on one side, and the other surface leans against the other filling layer 122. Thicknesses of the filling layers 122 on the two sides may be kept consistent or inconsistent.

The filling layers 122 disposed on the two sides of the body 121 can further increase the thickness of the tabs 12, thereby effectively eliminating the gap between the wound tabs 12.

According to some embodiments of this application, referring to FIG. 4, the filling layer 122 is a welded piece 12a.

As a welded piece 12a, the filling layer 122 is mounted onto at least one side of the body 121 through welding. During welding, a specific technology such as roll welding is used. When the two opposite sides of the body 121 each are provided with the welded piece 12a through welding, the welded pieces 12a on the two sides may not be connected or may be interconnected in a manner of bypassing the sides of the body 121. In this case, the body 121 exhibits a state of being covered by the welded pieces 12a.

Besides, during welding, the welded pieces 12a (for example, aluminum foils or copper foils) are attached to one side of the body 121 first, and then the welded pieces 12a are welded to the body 121 using a roll welding technology. In this case, a welding position (that is, a position of a welding mark) becomes thicker due to high-temperature melting of metal. After welding, the tab 12 may be cut through die cutting to retain the position of the welding mark on the tab 12 as well as to keep the top of the tab 12 flat, thereby allowing for convenient welding of the current collection component (for example, a current collection plate).

For example, the welded piece 12a may be but is not limited to an aluminum foil, a copper foil, or a silver foil.

The filling layer 122 is designed as a welded piece 12a, not only ensuring an effective thickness of the tab 12, but also enhancing a bonding strength between the filling layer 122 and the body 121, thereby improving structural stability of the electrode plate 10.

According to some embodiments of this application, the tab 12 further includes a curing layer. The curing layer is disposed on at least one side of the welded piece 12a facing away from the body 121.

The curing layer refers to a layer of structure for fixing a surface structure of the welded piece 12a. During welding, more or less spall particles (for example, burrs) are produced on the welded piece 12a. The particles are structurally unstable on the welded piece 12a, and therefore are likely to fall off during the manufacturing of the battery 10000, which in turn causes an electrical accident of the battery 10000. Therefore, a curing layer is disposed on the surface of the welded piece 12a to enhance the surface structure of the welded piece 12a. The curing layer has various designs, for example, may be an insulating adhesive layer, a conductive adhesive layer, or a bonding adhesive layer.

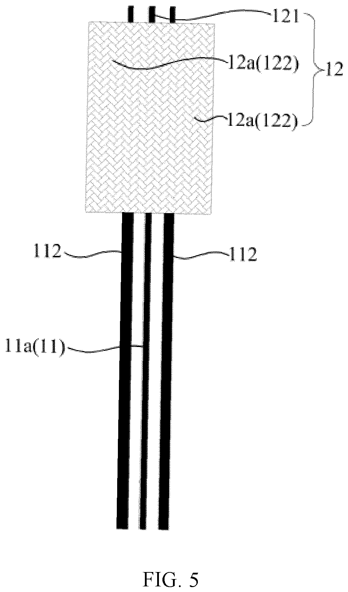

The curing layer may be disposed on only one side of the welded piece 12a facing away from the body 121 or may be disposed on any surface of the welded piece 12a, except for a surface connected to the body 121. It will be apparent that if an exposed surface of the welded piece 12a is entirely provided with the curing layer, an end of the welded piece 12a far away from the electrode plate 10 can be cut away through a process such as die cutting to expose the welded piece 12a, thereby allowing for convenient electrical connection between the current collection component and the wound tab 12. For details, refer to FIG. 5.

The curing layer is disposed on the welded piece 12a to cure the surface of the welded piece 12a, preventing spall particles produced during welding from falling into the battery 10000 which can cause an electrical accident of the battery 10000, thereby further improving the safety performance of the battery 10000.

According to some embodiments of this application, referring to FIG. 4, the thickness h1 of the tab 12 is greater than a thickness sum h3 of the main body portion 11a and the active layer 112.

When one side of the main body portion 11a is coated with the active layer 112, the thickness h1 of the tab 12 is greater than the thickness sum h3 of the main body portion 11a and the active layer 112 on one side. When the two sides of the main body portion 11a are both coated with the active layers 112, the thickness h1 of the tab 12 is greater than the thickness sum h3 of the main body portion 11a and the active layers 112 on the two sides.

With the thickness of the tab 12 further designed to be greater than the thickness sum of the main body portion 11a and the active layer 112, elimination of the gap between the tabs 12 can be further ensured during winding, thereby improving the safety performance of the battery 10000.

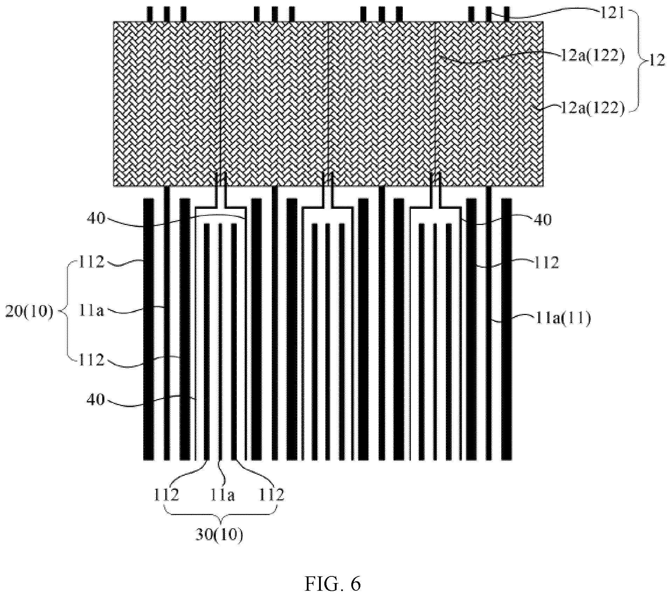

According to some embodiments of this application, referring to FIG. 6, this application provides an electrode assembly 100. The electrode assembly 100 includes a first electrode plate 20 and a second electrode plate 30 having opposite polarities, and a separator 40 disposed between the first electrode plate 20 and the second electrode plate 30. The first electrode plate 20, the second electrode plate 30, and the separator 40 are wound to form a wound structure. The first electrode plate 20 and/or the second electrode plate 30 is the electrode plate 10 in any one of the foregoing solutions.

The first electrode plate 20 and the second electrode plate 30 have opposite polarities. For example, the first electrode plate 20 is a positive electrode plate 10, and the second electrode plate 30 is a negative electrode plate 10. Alternatively, the first electrode plate 20 is a negative electrode plate 10, and the second electrode plate 30 is a positive electrode plate 10. In addition, during winding of the first electrode plate 20 and the second electrode plate 30, the tabs 12 of the first electrode plate 20 and second electrode plate 30 may be located on two opposite sides of the electrode assembly 100 or on a same side of the electrode assembly 100. In a case that the positive and negative tabs 12 are located on a same side, one tab 12 may be designed to protrude from the separator 40, and the other tab 12 is designed to not surpass the separator 40. For a specific structure, reference may be made to existing literature.

The first electrode plate 20 and/or the second electrode plate 30 being the electrode plate 10 in any one of the foregoing solutions should be understood as that at least one of the first electrode plate 20 and the second electrode plate 30 is the electrode plate 10 described above. One of the first electrode plate 20 and the second electrode plate 30 being the electrode plate 10 in the foregoing solutions can ensure that no gap is present between the wound tabs 12 at one side. In some specific embodiments, the first electrode plate 20 and the second electrode plate 30 are both the electrode plate 10 in any one of the foregoing solutions.

The separator 40 is a porous plastic film, which allows lithium ions to pass through freely so as to form a loop and also prevents direct contact between two electrodes to achieve an electronic insulation effect. A type of the separator 40 may be but is not limited to a single polyethylene layer or a single polypropylene layer.

With use of the foregoing electrode plate 10, the tabs 12 do not need to be flattened, so it is unnecessary to reserve space for flattening on the electrode plate 10, such that this space can be effectively utilized by the electrode plate 10, increasing the energy density of the battery 10000. Moreover, the risk of short circuit caused by interpolation of the tab 12 in the flattening process can be effectively avoided, further improving the safety performance of the battery 10000. In addition, in this application, the thickness of the tab 12 is properly controlled, and the use of conventional flattening processes is not needed, effectively compensating for the application of a composite substrate to which a flattening process cannot be applied in a large cylindrical cell.

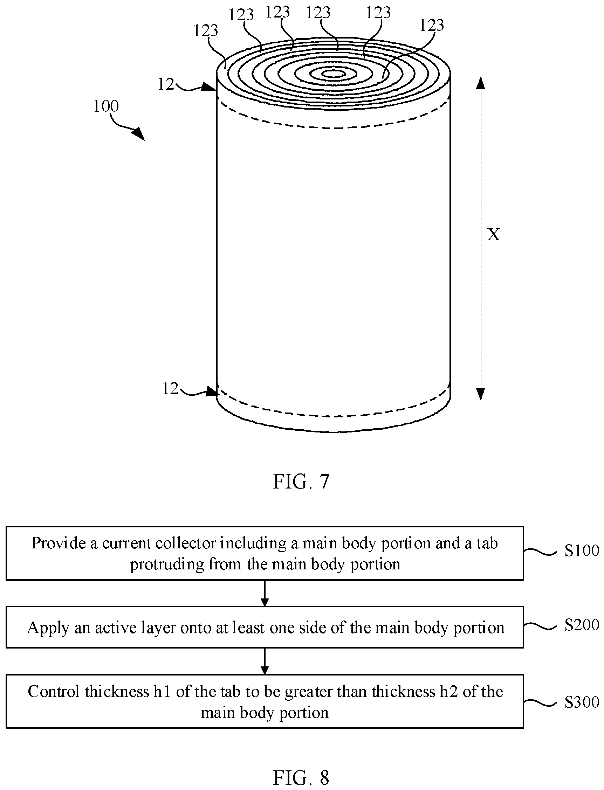

According to some embodiments of this application, referring to FIG. 7, the tab 12 of the first electrode plate 20 and the tab 12 of the second electrode plate 30 are separately located on two opposite sides of the electrode assembly 100. Either of the tabs 12 is wound to form at least two consecutive ring layers 123. Two adjacent ring layers 123 at a same side are attached to each other.

The tab 12 of the first electrode plate 20 and the tab 12 of the second electrode plate 30 being separately located on two opposite sides of the electrode assembly 100 should be understood as that positive and negative tabs are distributed on two sides of the electrode assembly 100 in a preset direction X. In addition, the preset direction X may be understood as a height direction of the electrode assembly 100, which may specifically refer to a direction indicated by any arrow of X in FIG. 7.

The ring layer 123 refers to a smallest annular unit formed by sequentially winding the tabs 12 along a specified direction (for example, a clockwise direction or an anticlockwise direction). All the ring layers 123 are interconnected consecutively. In addition, the ring layers 123 are attached to each other, to be specific, no gap is present therebetween.

In this way, the tabs 12 each are wound to form at least two consecutive ring layers 123 and the two adjacent ring layers 123 are controlled to be attached to each other, such that no gap is present between the tabs 12 obtained in such a manner. Not using a flattening process facilitates improvement of the safety performance and energy density of the battery 10000.

According to some embodiments of this application, referring to FIG. 6, the tabs 12 of the first electrode plate 20 and second electrode plate 30 each include a body 121 and a filling layer 122. Between the two adjacent ring layers 123 at the same side, two surfaces of the filling layer 122 separately lean against two wound bodies 121.

The two surfaces of the filling layer 122 separately leaning against two wound bodies 121 should be understood as that one side of the body 121 is provided with the filling layer 122, but the other side is not provided with the filling layer 122. In this case, one filling layer 122 is used for filling space between the wound tabs 12.

By virtue of the filling layer 122 at one side, the gap between the wound tabs 12 is eliminated, thereby improving the safety performance of the battery 10000.

According to some embodiments of this application, referring to FIG. 6, the tabs 12 of the first electrode plate 20 and second electrode plate 30 each include a body 121 and filling layers 122 separately disposed at two opposite sides of the body 121 in a thickness direction, where the two filling layers 122 lean against each other.

The two filling layers 122 leaning against each other means that a surface of one filling layer 122 leans against the body 121, and the other surface leans the other filling layer 122, to be specific, the two sides of the body 121 each are provided with the filling layer 122. After the first electrode plate 20 and the second electrode plate 30 are simultaneously wound, the two filling layers 122 are used for filling the space between the tabs 12 at the same side. In this case, between the two adjacent ring layers 123 at the same side, a thickness sum of the two filling layers 122 is greater than or equal to a thickness sum of two layers of separators 40, four active layers 112 and one layer of first portion 2100 after winding.

By virtue of the filling layers 122 at the two sides of the body 121, the gap between the wound tabs 12 is further eliminated, thereby further improving the safety performance of the battery 10000.

In some embodiments, the electrode assembly 100 further includes a current collection component. The current collection component is electrically connected to the wound tab 12.

The current collection component is a component configured to electrically connect the electrode assembly 100 and an electrical connecting terminal on an end cover, and has two states. One is a manufacturing state of the current collection component after processing is completed, and the other is a usage state of the current collection component used in a battery cell 1000. The current collection component needs to undergo corresponding bending treatment during transition from manufacturing state to usage state.

Specifically, in the manufacturing state, the current collection component is approximately a plate structure, with a relatively large length. In addition, the current collection component is connected to the tab 12 through welding.

The current collection component being electrically connected to the tab 12 allows for convenient electrical connection between the electrode assembly 100 and the end cover, thereby facilitating assembly of the battery cell 1000.

According to some embodiments of this application, referring to FIG. 8, this application provides an electrode plate manufacturing method including the following steps.

Step 100. Provide a current collector 11 including a main body portion 11a and a tab 12 protruding from the main body portion 11a.

Step 200. Apply an active layer 112 onto at least one side of the main body portion 11a.

Step 300. Control thickness h1 of the tab 12 to be greater than thickness h2 of the main body portion 11a.

In step S200, the active layer 112 may be applied onto only one side of the main body portion 11a or applied onto two opposite sides of the main body portion 11a.

In step S300, the thickness of the tab 12 is controlled in various manners. For example, during formation of the current collector 11, the current collector 11 is controlled to have at least two positions with different thicknesses. Alternatively, the tab 12 is thickened, for example, a structure with a specified thickness is attached to the tab 12 through welding, adhesion, screwing, or the like.

According to the foregoing electrode plate manufacturing method, the thickness h1 of the tab 12 is designed to be greater than the thickness h2 of the main body portion 11a, so that a thickness difference is present between the tab 12 and the main body portion 11a. This helps to eliminate the gap between the tabs 12 of wound electrode plates 10 during battery manufacturing, such that the tabs 12 are tightly connected to each other.

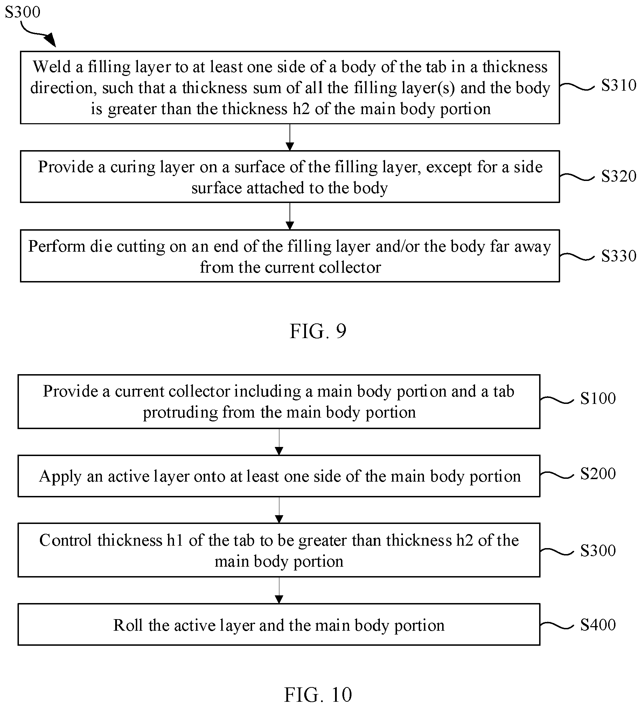

According to some embodiments of this application, referring to FIG. 9, the step S300 of controlling the thickness h1 of the tab 12 of the electrode plate 10 to be greater than the thickness h2 of the main body portion 11a includes the following steps.

S310. Weld a filling layer 122 to at least one side of the body 121 of the tab 12 in a thickness direction, such that a thickness sum of all the filling layer(s) 122 and the body 121 is greater than the thickness h2 of the main body portion 11a.

In step S310, the filling layer 122 may be welded to one side of the body 121 or the filling layers 122 are respectively welded to two sides of the body 121. When the filling layers 122 are respectively welded to the two sides, one surface of one filling layer 122 leans against the body 121, and the other surface leans against the other filling layer 122.

With the filling layer 122 welded to at least one side of the body 121, the gap between the wound tabs 12 is effectively eliminated, improving the safety performance of the battery 10000.

According to some embodiments of this application, referring to FIG. 9, after the step S310 of welding a filling layer 122 to at least one side of the body 121 of the tab 12 in a thickness direction, the following step is further included.

S320. Provide a curing layer on a surface of the filling layer 122, except for a side surface attached to the body 121.

A surface of the filling layer 122, except for a side surface attached to the body 121, should be understood as a surface of the filling layer 122 exposed outside the body 121, that is, a surface accessible to an operator. In addition, before the filling layer 122 is cured, a surface of the filling layer 122 may be cleaned to remove impurities attached to the surface of the filling layer 122.

Curing the surface of the filling layer 122 prevents spall particles produced during welding from falling into the battery 10000 which can cause an electrical accident of the battery 10000, thereby further improving the safety performance of the battery 10000.

According to some embodiments of this application, referring to FIG. 9, after the step S310 of welding a filling layer 122 to at least one side of the body 121 of the tab 12 in a thickness direction, the following step is further included.

S330. Perform die cutting on an end of the filling layer 122 and/or the body 121 far away from the current collector 11.

Step S320 and step S330 may be performed in an unlimited order. For example, step S320 and step S330 may be performed simultaneously, that is, curing and die cutting are performed simultaneously. Alternatively, step S320 and step S330 are performed in order, for example, the filling layer 122 is cured first, and then the filling layer 122 cured is subjected to die cutting. Still alternatively, step S330 is performed first, and then step S320 is performed. In some specific embodiments, step S320 is performed first, and then step S330 is performed.

During die cutting, die cutting is performed on one end of only the filling layer 122 or body 121 or on end portions of both the filling layer 122 and body 121.

The end of the filling layer 122 and/or body 121 far away from the electrode plate 10 is cut away through die cutting to expose a welded piece 12a, facilitating electrical connection between the current collection component and the wound tab 12.

According to some embodiments of this application, referring to FIG. 10, the method further includes the following step.

S400. Roll the active layer 112 and the main body portion 11a.

In step S200, the active layer 112 is applied onto the main body portion 11a using a specific process of coating. Coating refers to a process in which a relevant device is used to uniformly apply a suspension slurry containing positive and negative electrode active substances onto an aluminum foil or copper foil and then drying is performed for forming a film. The specific coating process at least includes shear coating, wetting, leveling, drying, and the like. Specific operations of these steps are not described in detail herein, and may directly refer to existing documents. The active substance varies depending on the polarities of the positive and negative electrodes. Specific materials may refer to the active substances in the foregoing embodiments.

Rolling is typically performed after the coating and drying steps and refers to a process for compacting a powdery electrode material applied on metal current collectors 11 of the positive and negative electrodes by using a roller press as well as a process for rearrangement and densification of the powder.

Structurally stable electrode plates 10 are obtained through a rolling process.

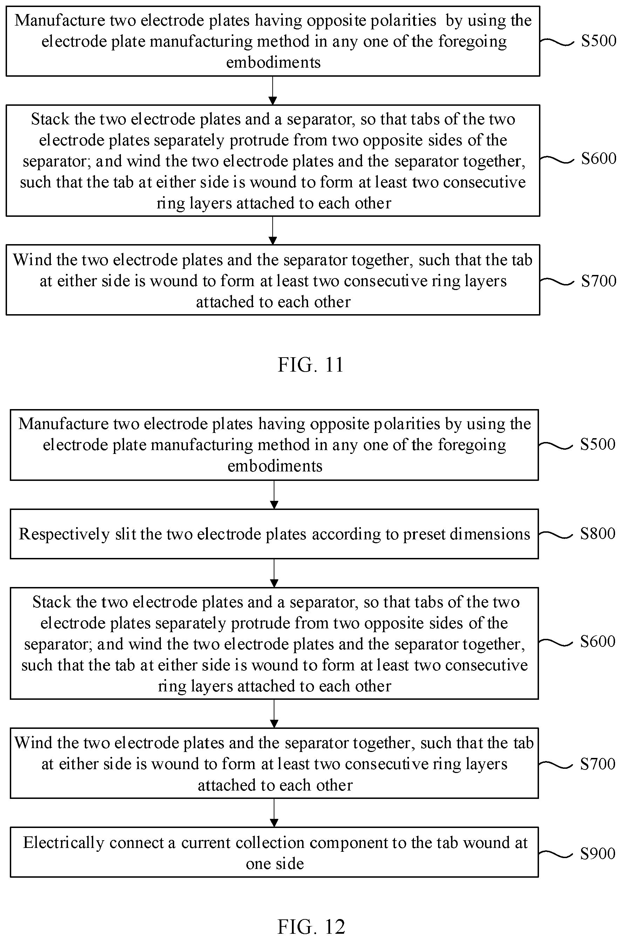

According to some embodiments of this application, referring to FIG. 11, this application provides an electrode assembly manufacturing method including the following steps.

S500. Manufacture two electrode plates 10 having opposite polarities by using the electrode plate manufacturing method in any one of the foregoing embodiments.

S600. Stack the two electrode plates 10 and a separator 40, so that tabs 12 of the two electrode plates 10 separately protrude from two opposite sides of the separator 40.

S700. Wind the two electrode plates 10 and the separator 40 together, such that the tab 12 at either side is wound to form at least two consecutive ring layers 123 attached to each other.

In step S500, for ease of description, the two electrode plates 10 are respectively defined as a first electrode plate 20 and a second electrode plate 30 having opposite polarities, that is, a positive electrode plate and a negative electrode plate. In other words, the active layer 112 on one electrode plate 10 is a positive electrode material, and the active layer 112 on the other electrode plate 10 is a negative electrode material.

In step S600, the tabs 12 of the electrode plates 10 respectively protruding from two opposite sides of the separator 40 should be understood as that the tab 12 of the first electrode plate 20 and the tab 12 of the second electrode plate 30 are respectively located on two opposite sides of the electrode assembly 100, to be specific, one end is a positive tab 12, and the other end is a negative tab 12.

In step S700, when the two electrode plates 10 and the separator 40 are wound together, for example, when the first electrode plate 20 and the second electrode plate 30 are wound together, attention should be paid to their width sizes. For example, during winding, if the first electrode plate 20 is located at an outer ring with respect to the second electrode plate 30, the width size of the first electrode plate 20 should be greater than the width size of the second electrode plate 30. Similarly, if the second electrode plate 30 is located at an outer ring with respect to the first electrode plate 20, the width size of the second electrode plate 30 should be greater than the width size of the first electrode plate 20.

According to the foregoing electrode assembly manufacturing method, firstly two electrode plates 10 having opposite polarities are manufactured using the foregoing electrode plate manufacturing method; and then the two electrode plates 10 and a separator 40 are stacked and wound together, such that two adjacent ring layers 123 are attached to each other. This helps to eliminate the gap between the tabs 12 of the wound electrode plates 10, so that the tabs 12 are tightly connected to each other. In this case, during the manufacturing of the battery 10000 of this application, the tabs 12 do not need a flattening process, effectively preventing particles produced during flattening from falling into the battery 10000, thereby greatly improving the safety performance of the battery 10000. Since the tabs 12 do not need to be flattened, it is unnecessary to reserve space for flattening on the electrode plates 10, such that this space can be effectively utilized by the electrode plates 10, increasing the energy density of the battery 10000. Moreover, the risk of short circuit caused by interpolation of the tab 12 in the flattening process can be effectively avoided, further improving the safety performance of the battery 10000. In addition, in this application, the thickness of the tab 12 is properly controlled, and the use of conventional flattening processes is not needed, effectively compensating for the application of a composite substrate to which a flattening process cannot be applied in a large cylindrical cell.

According to some embodiments of this application, referring to FIG. 12, before the step S600 of stacking the two electrode plates 10 and a separator 40, the following step is further included.

S800. Respectively slit the two electrode plates 10 according to preset dimensions.

Slitting refers to a process in which a relevant device is used to slit a coated and rolled large electrode plate 10 into individual electrode plates 10, which specifically includes longitudinal slitting and horizontal slitting. The longitudinal slitting refers to an operation of slitting a large electrode plate 10 into strips along a length direction, while the horizontal slitting refers to a cutting operation performed along a direction perpendicular to the length direction. It will be apparent that shearing tools may be classified into slant edge shears, flat edge shears, rolling shears, disc shears, and the like based on their forms. In addition, the preset dimensions may also be understood as required dimensions, which can be determined based on an actual size of the electrode assembly 100.

The two electrode plates 10 are slit using a slitting process to meet requirements for manufacturing batteries 10000 of different specifications.

According to some embodiments of this application, referring to FIG. 12, after the method, the following step is further included.

S900. Electrically connect a current collection component to the tab 12 wound at one side.

The current collection component and the wound tab 12 may be connected in various manners, as long as they are electrically connected. For example, the current collection component is connected to the wound tab 12 through laser welding.

The current collection component being electrically connected to the tab 12 allows for convenient electrical connection between the electrode assembly 100 and the end cover, thereby facilitating assembly of the battery cell 1000.

According to some embodiments of this application, referring to FIG. 3 to FIG. 7, this application provides a battery cell 1000 including the electrode assembly 100 in any one of the foregoing solutions.

According to some embodiments of this application, this application provides a battery 10000 including the battery cell 1000 described in the foregoing solution.

According to some embodiments of this application, this application provides a novel structure designed for a tab 12 of a cylindrical cell. A welded piece 12a is welded to the tab 12 of an electrode plate 10. With a thickness difference of welding marks, no gap is present between the tabs 12 of a wound bare cell, so that while a top cover is being welded, laser is prevented from entering the bare cell. A specific process flow is: coating -> cold pressing (roll pressing) -> roll welding -> gluing -> laser die cutting -> slitting -> winding -> laser welding of the current collection component.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that persons of ordinary skill in the art may further make several modifications and improvements without departing from the concept of this application, and all these modifications and improvements fall within the protection scope of this application. Therefore, the protection scope of the patent of this application should be subject to the appended claims.

## Claims

1. An electrode plate, comprising:
a current collector (11) comprising a main body portion (11a) and a tab (12) protruding from the main body portion (11a); and
an active layer (112) applied onto at least one side of the main body portion (11a);
wherein the thickness h1 of the tab (12) is greater than the thickness h2 of the main body portion (11a).

2. The electrode plate according to claim 1, wherein the tab (12) comprises a body (121) and a filling layer (122) disposed on at least one side of the body (121) in a thickness direction.

3. The electrode plate according to claim 2, wherein two opposite sides of the body (121) in the thickness direction each are provided with the filling layer (122).

4. The electrode plate according to claim 2 or 3, wherein the filling layer (122) is a welded piece (12a).

5. The electrode plate according to claim 4, wherein the tab (12) further comprises a curing layer, the curing layer being disposed on at least one side surface of the welded piece (12a) facing away from the body (121).

6. The electrode plate according to any one of claims 1 to 5, wherein the thickness h1 of the tab (12) is greater than a thickness sum h3 of the main body portion (11a) and the active layer (112).

7. An electrode assembly, comprising a first electrode plate (20) and a second electrode plate (30) having opposite polarities, and a separator (40) disposed between the first electrode plate (20) and the second electrode plate (30), wherein the first electrode plate (20), the second electrode plate (30), and the separator (40) are wound to form a wound structure;
wherein the first electrode plate (20) and/or the second electrode plate (30) is the electrode plate according to any one of claims 1 to 6.

8. The electrode assembly according to claim 7, wherein a tab (12) of the first electrode plate (20) and a tab (12) of the second electrode plate (30) are separately located on two opposite sides of the electrode assembly; either of the tabs (12) is wound to form at least two consecutive ring layers (123); and two of the adjacent ring layers (123) at a same side are attached to each other.

9. The electrode assembly according to claim 8, wherein the tabs (12) of the first electrode plate (20) and second electrode plate (30) each comprise a body (121) and a filling layer (122); and
between the two adjacent ring layers (123) at the same side, two surfaces of the filling layer (122) separately lean against two wound bodies (121).

10. The electrode assembly according to claim 8 or 9, wherein the tabs (12) of the first electrode plate (20) and second electrode plate (30) each comprise a body (121) and filling layers (122) separately disposed on two opposite sides of the body (121) in a thickness direction, wherein the two filling layers (122) lean against each other.

11. The electrode assembly according to any one of claims 7 to 10, wherein the electrode assembly further comprises a current collection component, and the current collection component is electrically connected to the wound tab (12).

12. An electrode plate manufacturing method, comprising the following steps:
providing a current collector (11) comprising a main body portion (11a) and a tab (12) protruding from the main body portion (11a);
applying an active layer (112) onto at least one side of the main body portion (11a); and
controlling the thickness h1 of the tab (12) to be greater than the thickness h2 of the main body portion (11a).

13. The electrode plate manufacturing method according to claim 12, wherein the step of controlling the thickness h1 of the tab (12) of the electrode plate to be greater than the thickness h2 of the main body portion (11a) comprises:
welding a filling layer (122) to at least one side of the body (121) of the tab (12) in a thickness direction, such that a thickness sum of all the filling layer(s) (122) and the body (121) is greater than the thickness h2 of the main body portion (11a).

14. The electrode plate manufacturing method according to claim 13, wherein after the step of welding a filling layer (122) to at least one side of the body (121) of the tab (12) in a thickness direction, the method further comprises:
providing a curing layer on a surface of the filling layer (122), except for a side surface attached to the body (121).

15. The electrode plate manufacturing method according to claim 13 or 14, wherein after the step of welding a filling layer (122) to at least one side of the body (121) of the tab (12) in a thickness direction, the method further comprises:
performing die cutting on an end of the filling layer (122) and/or body (121) far away from the current collector (11).

16. The electrode plate manufacturing method according to any one of claims 12 to 15, after the method, further comprising:
rolling the active layer (112) and the main body portion (11a).

17. An electrode assembly manufacturing method, comprising the following steps:
manufacturing two electrode plates having opposite polarities by using the electrode plate manufacturing method according to any one of claims 12 to 16;
stacking the two electrode plates and a separator (40), so that tabs (12) of the two electrode plates separately protrude from two opposite sides of the separator (40); and
winding the two electrode plates and the separator (40) together, so that the tab (12) on either side is wound to form at least two consecutive ring layers (123) attached to each other.

18. The electrode assembly manufacturing method according to claim 17, wherein before the step of stacking the two electrode plates and the separator (40), the method further comprises:
respectively slitting the two electrode plates according to preset dimensions.

19. The electrode assembly manufacturing method according to claim 17 or 18, after the method, further comprising:
electrically connecting a current collection component to the tab (12) wound at one side.

20. A battery cell, comprising the electrode assembly according to any one of claims 7 to 11.

21. A battery, comprising the battery cell according to claim 20.
